# EUROPEAN PATENT APPLICATION

(11) **EP 2 940 951 A1**
(43) Date of publication of application: **04.11.2015**
(21) Application number: 13868874.2
(22) Date of filing: 13.12.2013
(51) Int. Cl.: H04L 12/917, H04L 12/927

(54) **BANDWIDTH ALLOCATION METHOD AND SYSTEM**

(30) Priority: 26.12.2012 CN 201210574894
(71) Applicant: ZTE Corporation, Shenzhen, Guangdong 518057 (CN)
(72) Inventor: CAO, Dengyuan, Shenzhen Guangdong 518057 (CN)
(74) Representative: Zimmermann, Tankred Klaus
(86) International application number: PCT/CN2013/089419
(87) International publication number: WO 2014/101675

(57) **Abstract**

Disclosed are a bandwidth allocation method and system. In the above method, a child node receives a first bandwidth which is allocated to the child node by a father node, wherein the first bandwidth is allocated by the father node according to the weight value of the child node; the child node allocates the first bandwidth according to the weight value of each of one or more nodes which subordinate to the child node. The technical solution, which is provided according to the present disclosure, is applicable to Weighted Fair Queuing (WFQ) scheduling in multi-level scenarios and multi-service scenarios and provides a flexible bandwidth allocation method for the multi-user and multi-service scenarios.

## Description

### Technical Field

The present disclosure relates to the field of communications, including e.g., a bandwidth allocation method and system.

### Background

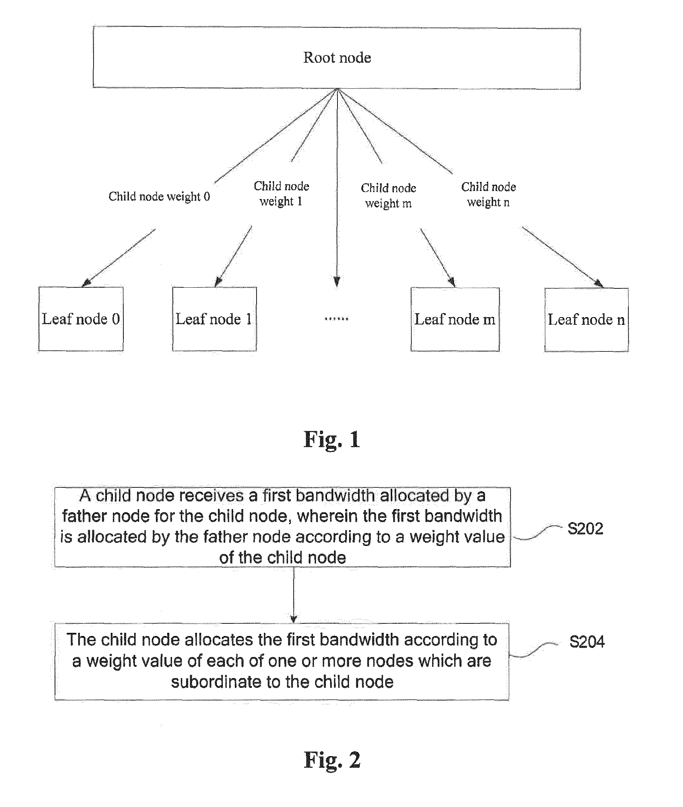

In the field of communications, a Weight Fair Queue (WFQ) is a fair queue scheduling based on weights, which is widely applied to Quality of Service (QOS) services and Hierarchy Quality of Service (HQOS) services, and provides various types of scheduling models. Fig. 1 is a schematic diagram of a basic WFQ scheduling model according to the related art. As shown in Fig. 1, a father node is the scheduling node which allocates, according to different weight value of each child node, a corresponding bandwidth to the each child node. The specific bandwidth allocation algorithm can be implemented by different manners, wherein the most commonly used implementation is that: the bandwidth occupation ratio of a child node m is Wm/(W0+W1+...+Wm+...+Wn). For a QOS service, the father node is a port of an apparatus (the port may be: a physical port or a logic port), while the child node corresponds to a specific physical queue; and for an HQOS service, which depends on different application scenarios, the father node and the child node may both be matched with any type of service match value. However, since the HQOS service is hierarchy, a simple WFQ model cannot be directly used; in addition, there is a possibility that the configurations of the services with multiple levels are different, which can not be met by an ordinary WFQ model.

### Summary

A bandwidth allocation method and system are provided in the embodiment of the present disclosure, so as to at least solve the problem in the related art that the basic WFQ scheduling model cannot be applied to the HQOS service.

According to one aspect of an embodiment of the present disclosure, a bandwidth allocation method is provided. The bandwidth allocation method, comprising: receiving, by a child node, a first bandwidth allocated by a father node for the child node, wherein the first bandwidth is allocated by the father node according to a weight value of the child node; and allocating, by the child node, the first bandwidth according to a weight value of each of one or more nodes which are subordinate to the child node.

In an example embodiment, when the father node is a root node, before receiving, by the child node, the first bandwidth allocated by the father node for the child node, the method further comprises: acquiring, by the father node, a total bandwidth to be allocated; and determining, by the father node, the child node subordinate to the father node, and allocating the first bandwidth for the child node from the total bandwidth according to a weight value of the child node.

In an example embodiment, when the father node is a node other than a root node, a leaf node and a father node of the leaf node, before receiving, by the child node, the first bandwidth allocated by the father node for the child node, the method further comprises: receiving, by the father node, a second bandwidth allocated for the father node by a node to which the father node is subordinate, wherein the second bandwidth is allocated, according to a weight value of the father node, by the node to which the father node is subordinate; and allocating, by the father node, the first bandwidth for the child node according to a weight value of the child node.

In an example embodiment, allocating, by the child node, the first bandwidth according to the weight value of each of the one or more nodes which are subordinate to the child node comprises: determining, by the child node, the one or more nodes subordinate to the child node; and acquiring, by the child node, a weight value of each of the one or more nodes respectively, and allocating in sequence the first bandwidth according to the weight value of each of the one or more nodes.

In an example embodiment, a service type represented by the father node or the child node is one of: a physical port, a tunnel, and a pseudo wire.

According to another aspect of the embodiment, a bandwidth allocation system, comprising: a child node; wherein the child node comprises: a first receiving component, configured to receive a first bandwidth allocated by a father node for the child node, wherein the first bandwidth is allocated by the father node according to a weight value of the child node; and a first allocating component, configured to allocate the first bandwidth according to a weight value of each of one or more nodes which are subordinate to the child node.

In an example embodiment, the system further comprises: the father node; wherein the father node comprises: an acquiring component, configured to acquire a total bandwidth to be allocated when the father node is a root node; and a second allocating component, configured to determine the child node subordinate to the father node, and allocate the first bandwidth for the child node from the total bandwidth according to a weight value of the child node.

In an example embodiment, the father node comprises: a second receiving component, configured to receive a second bandwidth allocated for the father node by a node to which the father node is subordinate when the father node is a node other than a root node, a leaf node and a father node of the leaf node, wherein the second bandwidth is allocated, according to a weight value of the father node, by the node to which the father node is subordinate; and a third allocating component, configured to allocate the first bandwidth for the child node according to a weight value of the child node.

In an example embodiment, the first allocating component comprises: a determining element, configured to determine the one or more nodes subordinate to the child node; and an allocating element, configured to acquire a weight value of each of the one or more nodes respectively, and allocate in sequence the first bandwidth according to the weight value of each of the one or more nodes.

In an example embodiment, a service type represented by the father node or the child node is one of: a physical port, a tunnel, and a pseudo wire.

By way of receiving, by a child node, a first bandwidth allocated by a father node for the child node; and allocating, by the child node, the first bandwidth according to a weight value of each of one or more nodes which are subordinate to the child node, the embodiments of the present disclosure solve the problem in the related art that a basic WFQ scheduling model cannot be applied to an HQOS service, and then is applicable to WFQ scheduling in multi-level and multi-service scenarios, thereby providing a flexible bandwidth allocation method for multi-user and multi-service scenarios.

### Brief Description of the Drawings

Drawings, provided for further understanding of the embodiments of the present disclosure and forming a part of the specification, are used to explain the present disclosure together with embodiments of the present disclosure rather than to limit the present disclosure. In the accompanying drawings:
Fig. 1 is a schematic diagram of a basic WFQ scheduling model according to the related art;
Fig. 2 is a flow chart of a bandwidth allocation method according to an embodiment of the present disclosure;
Fig. 3 is a flow chart of a bandwidth allocation method according to a preferred embodiment of the present disclosure;
Fig. 4 is a structural block diagram of a bandwidth allocation system according to an embodiment of the present disclosure;
Fig. 5 is a structural block diagram of a bandwidth allocation system according to an example embodiment of the present disclosure; and
Fig. 6 is a schematic diagram of a system running architecture according to an example preferred embodiment of the present disclosure.

### Detailed Description of the Embodiments

The disclosure is described below in detail by reference to the accompanying drawings in conjunction with embodiments. Note that, the embodiments of the present disclosure and the features of the embodiments can be combined with each other if there is no conflict.

Fig. 2 is a flow chart of a bandwidth allocation method according to an embodiment of the present disclosure. As shown in Fig. 2, the method may comprise the steps of:
Step S202: a child node receives a first bandwidth allocated by a father node for the child node, wherein the first bandwidth is allocated by the father node according to a weight value of the child node; and
Step S204: the child node allocates the first bandwidth according to a weight value of each of one or more nodes which are subordinate to the child node.

In the related art, a basic WFQ scheduling model cannot be applied to an HQOS service. In the method as shown in Fig. 2, the child node receives the first bandwidth allocated by the father node for the child node; and the child node allocates the first bandwidth according to the weight value of each of one or more nodes which are subordinate to the child node. That is to say, a hierarchical WFQ scheduling model on the basis of a basic WFQ scheduling model is provided on the basis of the multi-level character of HQOS and the character of the WFQ model, which solves the problem in the related art that a basic WFQ scheduling model cannot be applied to an HQOS service, and the method is applicable to the WFQ scheduling in multi-level scenarios and multi-service scenarios, thereby providing a flexible bandwidth allocation method for the multi-user and multi-service scenarios.

In an optional example, the service type represented by the above father node or the child node can be, but is not limited to, one of: a physical port, a tunnel, and a pseudo wire.

It should be noted that the service type represented by the above father node or the child node may also be: a Virtual Local Area Network (VLAN) and a virtual interface, as long as a forwarding entity supported by a communication apparatus.

In an optional example, when the father node is a root node, before the step S202, in which the child node receives the first bandwidth allocated by the father node for the child node, the following operations can also be included:
Step S 1: the father node acquires a total bandwidth to be allocated; and
Step S2: the father node determines the child node subordinate to the father node, and allocates the first bandwidth for the child node from the total bandwidth according to a weight value of the child node.

In an example embodiment, the technical solution provided in the present disclosure may comprise: one root node, n leaf nodes, and n virtual WFQ classes (equal to the child node), wherein the root node (equal to the father node) is configured to allocate a bandwidth for each virtual WFQ class in sequence according to a total bandwidth to be allocated and a weight value of each of the virtual WFQ classes subordinate to the root node; the virtual WFQ class then allocates different bandwidth to each of the leaf nodes according to the acquired bandwidth and a weight value of each of the leaf nodes subordinate to the virtual WFQ class; and each of the leaf nodes receives the bandwidth allocated by the virtual WFQ class.

In an optional example, when the father node is a node other than a root node, a leaf node and a father node of the leaf node, before the step S202 in which the child node receives the first bandwidth allocated by the father node for the child node, the following operations can also be included:
Step S3: the father node receives a second bandwidth allocated for the father node by a node to which the father node is subordinate, wherein the second bandwidth is allocated, according to a weight value of the father node, by the node to which the father node is subordinate; and
Step S4: the father node allocates the first bandwidth for the child node according to a weight value of the child node.

In the example embodiment, the root node allocates in sequence the bandwidth for each virtual WFQ class according to a total bandwidth to be allocated and the weight value of each of the virtual WFQ classes subordinate to the root node; the virtual WFQ class then allocates different bandwidths to various nodes in accordance with weight values of the nodes subordinate to the virtual WFQ class and according to the acquired bandwidth, and the allocation proceeds forward level by level until the virtual WFQ class to which the father node is subordinate allocates a bandwidth for the father node according to the weight value of the father node; secondary, the father node allocates the bandwidth for the child node according to the weight value of the child node; and the child node then allocates in sequence the bandwidth for each of the nodes subordinate to the child node according to the weight value of each node until the allocation proceeds to the leaf nodes, and then each of the leaf nodes receives the bandwidth allocated by the virtual WFQ class.

In an optional example, the step S204 in which the child node allocates the first bandwidth according to the weight value of each of the one or more nodes which are subordinate to the child node may comprise the following processing steps:
Step S5: the child node determines the one or more nodes subordinate to the child node; and
Step S6: the child node acquires the weight value of each of the one or more nodes respectively, and allocates in sequence the first bandwidth in accordance with the weight value of each of the one or more nodes.

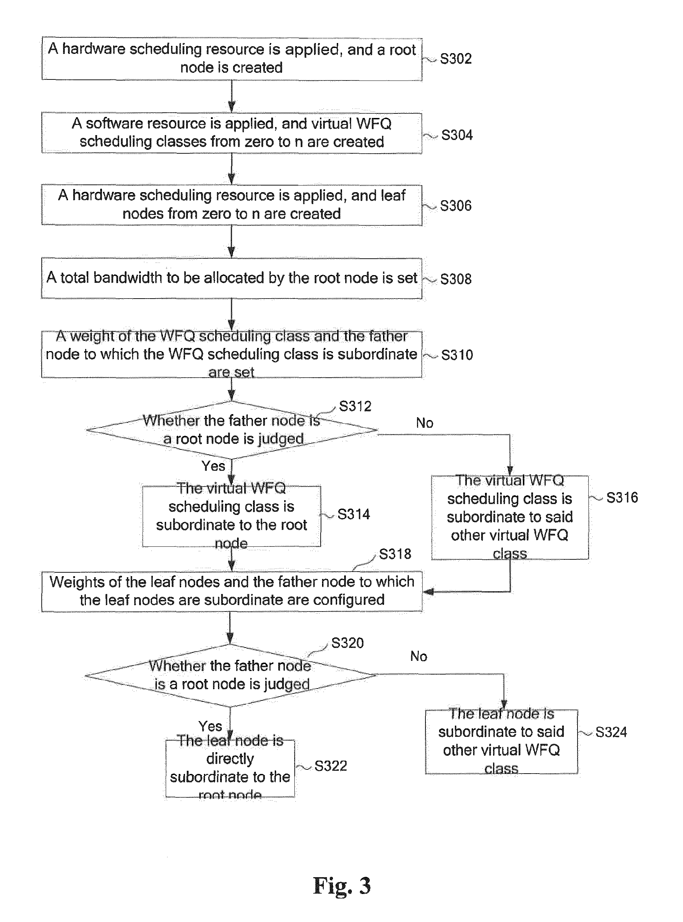

The optional example implementation is further described below in conjunction with the preferred implementation as shown in Fig. 3.

Fig. 3 is a flow chart of a bandwidth allocation method according to a preferred embodiment of the present disclosure. As shown in Fig. 3, the flow may comprise the following steps.

Step S302: a hardware scheduling resource is applied, and a root node is created;
Step S304: a software resource is applied, and virtual WFQ scheduling classes from zero to n are created;
Step S306: a hardware scheduling resource is applied, and leaf nodes from zero to n are created;
Step S308: a total bandwidth to be allocated by the root node is set;
Step S310: a weight of the WFQ scheduling class and the father node to which the WFQ scheduling class is subordinate are set;
Step S312: whether the father node is a root node is judged; and when a judging result is that the father node is the root node, step S314 is executed, when the judging result is that the father node is not the root node, step S316 is executed;
Step S314: when the father node is the root node, the virtual WFQ scheduling class is subordinate to the root node; and step S318 is executed;
Step S316: when the father node is of other virtual WFQ classes, the virtual WFQ scheduling class is subordinate to said other virtual WFQ class; and step S318 is executed;
Step S318: weights of the leaf nodes and the father node to which the leaf nodes are subordinate are configured;
Step S320: whether the father node is a root node is judged; and when a judging result is that the father node is the root node, step S322 is executed; otherwise, when the judging result is that the father node is not the root node, step S324 is executed;
Step S322: when the father node is the root node, the leaf node is directly subordinate to the root node; and
Step S324: when the father node is of other virtual WFQ classes, the leaf node is subordinate to said other virtual WFQ class.

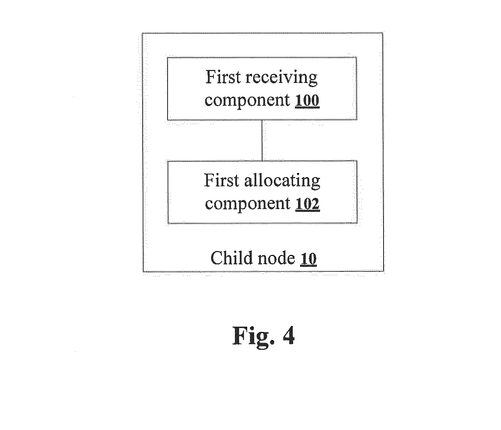

Fig. 4 is a structural block diagram of a bandwidth allocation system according to an embodiment of the present disclosure. As shown in Fig. 4, the bandwidth allocation system may comprise: a child node **10**, wherein the child node **10** may comprise: a first receiving component **100**, configured to receive a first bandwidth allocated by a father node for the child node, wherein the first bandwidth is allocated by the father node according to a weight value of the child node; and a first allocating component **102**, configured to allocate the first bandwidth according to a weight value of each of one or more nodes which are subordinate to the child node.

By using the system as shown in Fig. 4, the problem in the related art that the basic WFQ scheduling model cannot be applied to the HQOS service is solved, and then the system is applicable to WFQ scheduling in multi-level and multi-service scenarios, thereby providing a flexible bandwidth allocation method for multi-user and multi-service scenarios.

In an example implementation, the service type represented by the father node or the child node can be, but is not limited to, one of: a physical port, a tunnel, and a pseudo wire.

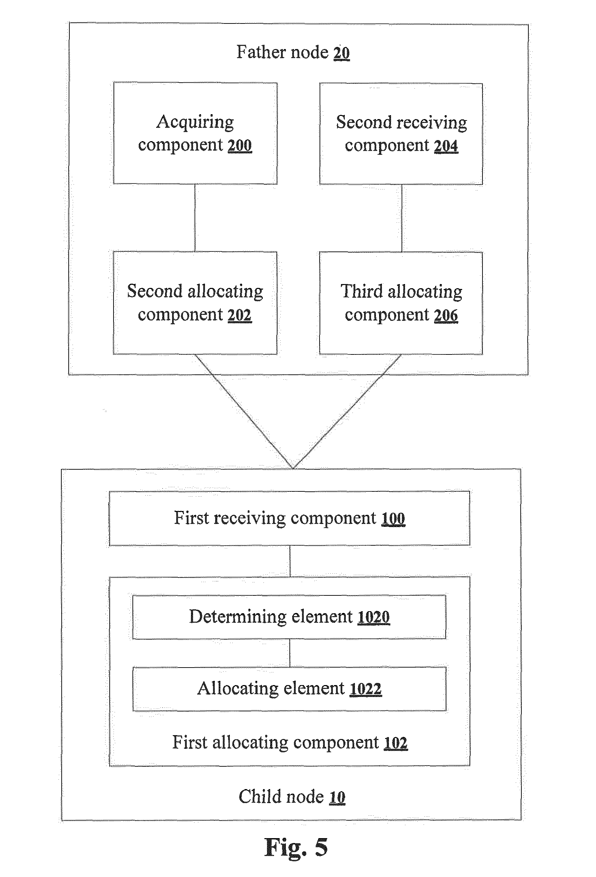

In an optional example, as shown in Fig. 5, the system may further comprise: a father node **20**, wherein the father node **20** may comprise: an acquiring component **200**, configured to acquire a total bandwidth to be allocated when the father node is a root node; and a second allocating component **202**, configured to determine the child node subordinate to the father node, and allocate the first bandwidth for the child node from the total bandwidth according to a weight value of the child node.

In an optional example, as shown in Fig. 5, the father node **20** may comprise: a second receiving component **204**, configured to receive a second bandwidth allocated for the father node by a node to which the father node is subordinate when the father node is a node other than a root node, a leaf node and a father node of the leaf node, wherein the second bandwidth is allocated, according to a weight value of the father node, by the node to which the father node is subordinate; and a third allocating component **206**, configured to allocate the first bandwidth for the child node according to a weight value of the child node.

In an example embodiment, as shown in Fig. 5, the first allocating component **102** may comprise: a determining element **1020,** configured to determine the one or more nodes subordinate to the child node; and an allocating element **1022,** configured to acquire a weight value of each of the one or more nodes respectively, and allocate in sequence the first bandwidth according to the weight value of each of the one or more nodes.

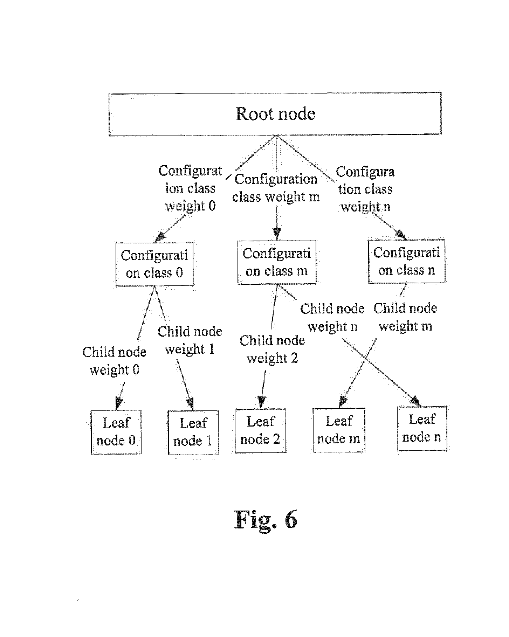

In an example embodiment, Fig. 6 is a schematic diagram of a system running architecture according to an example embodiment of the present disclosure. As shown in Fig. 6, one root node, virtual WFQ scheduling classes from zero to n and leaf nodes from zero to n can be created according to creation parameters; moreover, according to configuration parameters, the total bandwidth to be allocated of the root node can also be set; a weight value of the virtual WFQ class can be configured and a father node to which the virtual WFQ class needs to be subordinate can be selected; and a weight value of the child node can be configured and a father node to which the child node needs to be subordinate can be selected. The virtual WFQ scheduling class can flexibly create a scheduling model in accordance with specific requirements. The unit of the total bandwidth can be one of: kilobit per second (Kbit/s), megabit per second (Mbit/s), and gigabit per second (Gbit/s). When the father node is a root node, the virtual WFQ class can be directly subordinate to the root node; and when the father node is a virtual WFQ class, the virtual WFQ class can be subordinate to other virtual WFQ class. Similarly, when the father node of the leaf node is the root node, the leaf node can be directly subordinate to the root node; while the father node of the leaf node is the virtual WFQ class, the leaf node can be directly subordinate to the virtual WFQ class.

From the above description, it can be seen that the embodiment achieves the following technical effects (it should be noted that these effects are effects that can be achieved by some example embodiments): the problem in the related art that the basic WFQ scheduling model cannot be applied to an HQOS service is solved, and then the system is applicable to WFQ scheduling in multi-level and multi-service scenarios, thereby providing a flexible bandwidth allocation method for multi-user and multi-service scenarios.

Obviously, those skilled in the art should know that each of the mentioned components or steps of the disclosure can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present disclosure is not restricted to any particular hardware and software combination.

The above description is only example embodiments of the disclosure and is not intended to limit the disclosure, and the disclosure can have a variety of changes and modifications for ordinary person skilled in the field. Any amendments, equivalent substitutions, improvements, etc. within the principle of the present disclosure are all included in the scope of the protection as defined by the appended claims of the present disclosure.

### Industrial Applicability

The technical solution provided by the embodiments of the present disclosure can be applied to the field of communications; the problem in the related art that a basic WFQ scheduling model cannot be applied to an HQOS service is solved, and then the system is applicable to WFQ scheduling in multi-level and multi-service scenarios, thereby providing a flexible bandwidth allocation method for multi-user and multi-service scenarios.

## Claims

1. A bandwidth allocation method, **characterized by** comprising:
receiving, by a child node, a first bandwidth allocated by a father node for the child node, wherein the first bandwidth is allocated by the father node according to a weight value of the child node; and
allocating, by the child node, the first bandwidth according to a weight value of each of one or more nodes which are subordinate to the child node.

2. The method according to claim 1, **characterized in that**, when the father node is a root node, before receiving, by the child node, the first bandwidth allocated by the father node for the child node, the method further comprises:
acquiring, by the father node, a total bandwidth to be allocated; and
determining, by the father node, the child node subordinate to the father node, and allocating the first bandwidth for the child node from the total bandwidth according to a weight value of the child node.

3. The method according to claim 1, **characterized in that**, when the father node is a node other than a root node, a leaf node and a father node of the leaf node, before receiving, by the child node, the first bandwidth allocated by the father node for the child node, the method further comprises:
receiving, by the father node, a second bandwidth allocated for the father node by a node to which the father node is subordinate, wherein the second bandwidth is allocated, according to a weight value of the father node, by the node to which the father node is subordinate; and
allocating, by the father node, the first bandwidth for the child node according to a weight value of the child node.

4. The method according to claim 1, **characterized in that** allocating, by the child node, the first bandwidth according to the weight value of each of the one or more nodes which are subordinate to the child node comprises:
determining, by the child node, the one or more nodes subordinate to the child node; and
acquiring, by the child node, a weight value of each of the one or more nodes respectively, and allocating in sequence the first bandwidth according to the weight value of each of the one or more nodes.

5. The method according to any one of claims 1-4, **characterized in that** a service type represented by the father node or the child node is one of:
a physical port, a tunnel, and a pseudo wire.

6. A bandwidth allocation system, **characterized by** comprising: a child node;
wherein the child node comprises:
a first receiving component, configured to receive a first bandwidth allocated by a father node for the child node, wherein the first bandwidth is allocated by the father node according to a weight value of the child node; and
a first allocating component, configured to allocate the first bandwidth according to a weight value of each of one or more nodes which are subordinate to the child node.

7. The system according to claim 6, **characterized in that** the system further comprises: the father node;
wherein the father node comprises:
an acquiring component, configured to acquire a total bandwidth to be allocated when the father node is a root node; and
a second allocating component, configured to determine the child node subordinate to the father node, and allocate the first bandwidth for the child node from the total bandwidth according to a weight value of the child node.

8. The system according to claim 6, **characterized in that**
the father node comprises:
a second receiving component, configured to receive a second bandwidth allocated for the father node by a node to which the father node is subordinate when the father node is a node other than a root node, a leaf node and a father node of the leaf node, wherein the second bandwidth is allocated, according to a weight value of the father node, by the node to which the father node is subordinate; and
a third allocating component, configured to allocate the first bandwidth for the child node according to a weight value of the child node.

9. The system according to claim 6, **characterized in that** the first allocating component comprises:
a determining element, configured to determine the one or more nodes subordinate to the child node; and
an allocating element, configured to acquire a weight value of each of the one or more nodes respectively, and allocate in sequence the first bandwidth according to the weight value of each of the one or more nodes.

10. The system according to any one of claims 6-9, **characterized in that** a service type represented by the father node or the child node is one of:
a physical port, a tunnel, and a pseudo wire.
